# EUROPEAN PATENT APPLICATION

(11) **EP 2 549 471 A2**
(43) Date of publication of application: **23.01.2013**
(21) Application number: 12177156.2
(22) Date of filing: 19.07.2012
(51) Int. Cl.: G09G 5/14, G06F 3/048

(54) **Apparatus and method for displaying popup window in portable terminal**

(30) Priority: 20.07.2011 KR 20110072181
(71) Applicant: Samsung Electronics Co., Ltd., Suwon-si, Gyeonggi-do, 443-742 (KR)
(72) Inventor: Kong, Keon-Pyo, 443-742 Gyeonggi-do (KR)
(74) Representative: Harrison Goddard Foote

(57) **Abstract**

An apparatus and a method for displaying a popup window in a portable terminal is provided. The apparatus includes a display unit for displaying the popup window along a longer side of a display area of the display unit, according to a display mode of the portable terminal; and a controller for controlling the display unit to display the popup window along the longer side as well as a selected generation position corresponding to the popup window, as a reference, according to the display mode of the portable terminal.

## Description

### BACKGROUND OF THE INVENTION

### 1. Field of the Invention

The present invention relates generally to an apparatus and a method for displaying a popup window in a portable terminal, and more particularly to an apparatus and a method for efficiently arranging and displaying a popup window in a portable terminal according to an orientation change thereof.

### 2. Description of the Related Art

In current mobile communication terminals, a popup window, which displays an additional description of a particular place or a subordinate menu of a menu selected by the portable terminal, is generated and displayed according to a fixed position on a screen of the portable terminal.

In this respect, although the popup window can be displayed in a direction identical to that of the screen of the portable terminal according to an orientation change of the portable terminal, a position, at which the popup window is displayed on the screen, is fixed. Therefore, the popup window is not arranged at an optimized position according to a changed orientation of the portable terminal.

### SUMMARY OF THE INVENTION

Accordingly, the present invention has been made to address the above-mentioned problems occurring in the prior art, and an aspect of the present invention provides an apparatus and a method for displaying a popup window in a portable terminal, by which a popup window of the portable terminal can be efficiently arranged and displayed according to an orientation change thereof.

In accordance with an aspect of the present invention, there is provided an apparatus for displaying a popup window in a portable terminal The apparatus includes a display unit for displaying the popup window along a longer side of a display area of the display unit, according to a display mode of the portable terminal; and a controller for controlling the display unit to display the popup window along the longer side as well as a selected generation position corresponding to the popup window, as a reference, according to the display mode of the portable terminal.

In accordance with another aspect of the present invention, there is provided a method for displaying a popup window in a portable terminal. The method includes selecting a generation position of the popup window; determining a relevant mode of the portable terminal after selection of the generation position; and displaying the popup window on the surface along a longer side of a displays area of the display unit and displaying the selected generation position of the popup window as a reference in the relevant mode of the portable terminal.

### BRIEF DESCRIPTION OF THE DRAWINGS

The above and other features, aspects, and advantages of the present invention will be more apparent from the following detailed description taken in conjunction with the accompanying drawings, in which:
FIG. 1 is a block diagram illustrating the configuration of a portable terminal according to an embodiment of the present invention;
FIGs. 2A to 2C are diagrams illustrating a flowchart of a process for displaying a popup window in a relevant mode according to an orientation change of a portable terminal according to an embodiment of the present invention;
FIGs. 3A to 3C are diagrams illustrating display screens according to a process for displaying a popup window in a portrait mode of a portable terminal according to an embodiment of the present invention; and
FIGs. 4A to 4C are diagrams illustrating display screens according to a process for displaying a popup window in a landscape mode of a portable terminal according to an embodiment of the present invention.

### DETAILED DESCRIPTION OF EMBODIMENTS OF THE PRESENT INVENTION

Hereinafter, embodiments of the present invention will be described in detail with reference to the accompanying drawings. It should be noted that, in the accompanying drawings, the same elements will be designated by the same reference numerals throughout the following description and drawings although they may be shown in different drawings.

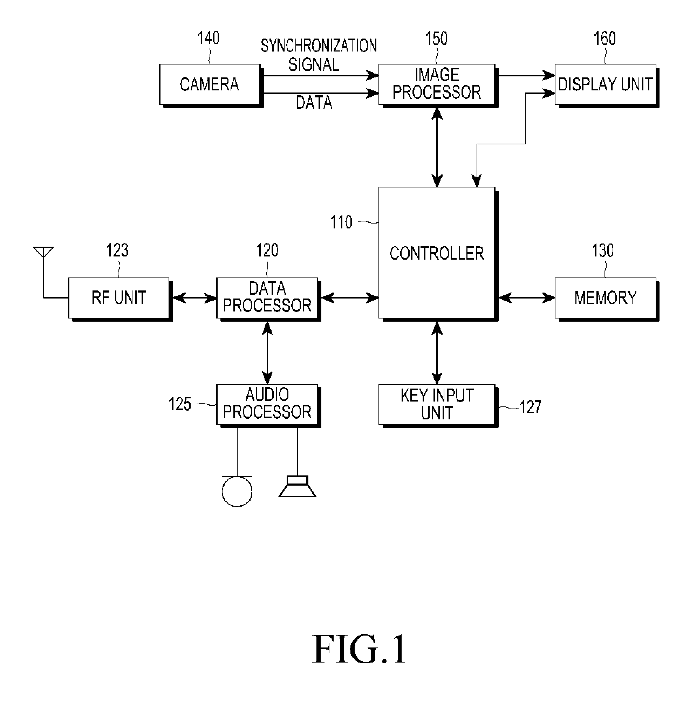

FIG. 1 is a block diagram illustrating the configuration of a portable terminal according to an embodiment of the present invention.

Although embodiments of the present invention described herein refer to displaying popup window in a display unit of a portable terminal, the present invention can be applied to not only display units of portable terminals, but also to display unit connectable to other electronics that can display popup windows.

Referring to FIG. 1, a Radio Frequency (RF) unit 123 performs a wireless communication function of the portable terminal. The RF unit 123 may include an RF transmitter for upconverting the frequency of a signal to be transmitted and then amplifying the frequency-upconverted signal, an RF receiver for low-noise amplifying a received signal and then downconverting the frequency of the low-noise amplified signal, etc. (not shown). A data processor 120 includes a transmitter for encoding and modulating a signal to be transmitted, a receiver for demodulating and decoding a signal received by the RF unit 123, etc. Namely, the data processor 120 may include a modem (MOdulator/DEModulator) and a codec (COder/DECoder) (not shown). In the present example, the codec may include a data codec for processing data such as packet data, and an audio codec for processing audio signals such as voice signals. The audio processor 125 reproduces a received audio signal, which has been output from the audio codec of the data processor 120, or transmits an audio signal to be transmitted, which is generated from a microphone, to the audio codec of the data processor 120.

A key input unit 127 may include keys (not shown) for inputting numbers and text information and function keys for setting various functions.

A memory 130 may include a program memory and a data memory (not shown). The program memory may store programs for controlling general operations of the portable terminal and also store programs capable of automatically arranging and then displaying a popup window in a landscape mode or in a portrait mode according to an orientation change of the portable terminal according to an embodiment of the present invention. Also, the data memory temporarily stores data generated while the programs are performed.

The controller 110 controls an overall operation of the portable terminal. According to an embodiment of the present invention, the controller 110 displays a popup window on a surface at a longer side with a generation position of the popup window, which has been selected in a relevant mode of the portable terminal, as a reference. Examples of displays units herein refer to display units having substantially rectangular display areas. In the case of display units having substantially rectangular display areas, the term "longer side" refers to either one of the longer sides of a rectangle. For example, in a portrait mode, the term "longer side" refers to either one of the upper or lower sides of the display area. Similarly, in a landscape mode, the term "longer side" refers to either one of the left or right sides of the display area. Although rectangular displays are referred herein as examples, embodiments of the present invention are not limited exclusively to rectangular displays, and other displays, such as other displays having an overall variation in length in width in order to accommodate portrait and landscape orientations, may be utilized in accordance with embodiments of the present invention.

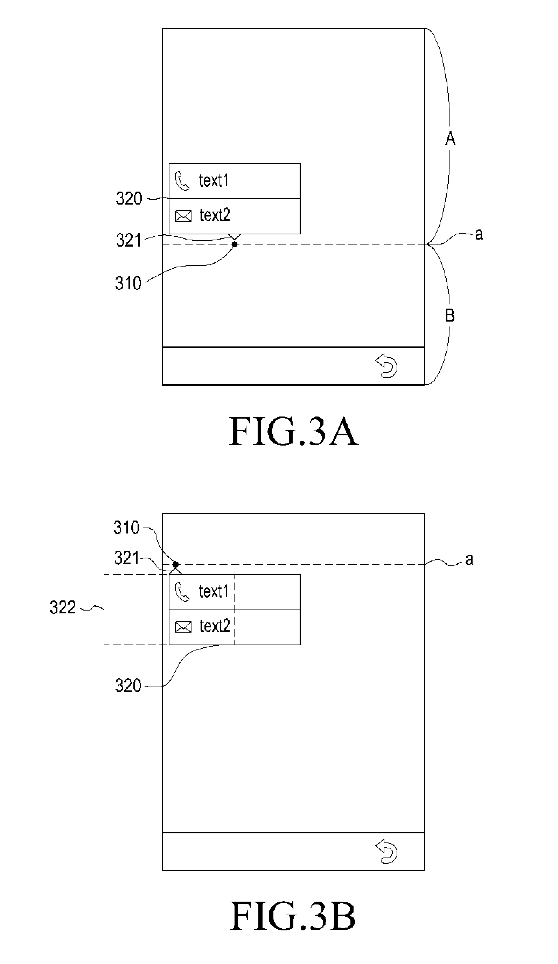

The controller 110 displays the popup window on a surface along a longer side of a display area of the display unit 160, between the upper side and a surface at the lower side of the display area of the display unit 160 with a generation position of a popup window as a reference in a portrait mode of the portable terminal. For example, as shown in FIG. 3A, which is described in further detail herein below, popup window 320 is displayed along the left side (i.e., one of the longer sides, which includes the left and right sides in portrait mode) of a display area of the display unit 160. Generation point 310 is located near a center of the lower side of the popup window 320 in order to indicate the initial generation position of the popup window 320 as a reference point. An anchor 321 indicates the initial generation position of the popup window 320 in the display area.

As described above, the controller 110 selects a generation position as a reference in the portrait mode of the portable terminal corresponding to the popup window. More specifically, the controller 110 selects an area along a longer side of the display area between the upper side and the lower side of the display unit 160 as an initial selected generation position of the popup window.

After an initial generation position has already been selected, when the display area of the popup window corresponding to the selected initial generation position as a reference extends beyond either of the left or right sides (i.e., the longer sides in portrait mode) of the display area of the display unit 160, the controller 110 displays the popup window at a new position moved to the right or left by a distance corresponding to an amount by which the display area corresponding to the initially selected position extends beyond the left or right side of the display area of the display unit 160.

At this time, when displaying the popup window at the moved position, the controller 110 displays an anchor of the popup window in such a manner as to indicate the initially selected generation position of the popup window. In other words, even though the displayed popup window has moved from a position corresponding to the initially selected generation position, the displayed anchor is still displayed according to the initially selected generation position, rather than according to the moved location of the displayed popup window.

For example, in FIG. 3B, which is explained in more detail herein below, generation position 310 is initially selected as a generation position corresponding to popup window 320. An initial display area 322 of the popup window corresponding to the initially selected generation position 310 is indicated by dashed lines. Since the initial display area 322 extends beyond the left side of the display area of the display unit, the popup window 320 is moved towards the right such that the entire display area of the moved popup window 320 is included within the display area of the display unit 160. Further, even though the popup window 320 is moved to the right, the location of the anchor 321 is based upon the location of initially selected generation point 310 selected before the popup window 320 was moved from the initial display area 322.

In FIG. 3B, for example, the moved popup window 320 is not exactly aligned with the left edge of the display area of the display unit 160. According to embodiments of the present invention, the popup window 320 may be moved from the initial display area 322 by a distance equal to or substantially equal to the amount by which the initial display area 322 extend beyond the left side of the display area of the display unit 160, such that the popup window is exactly or substantially aligned with the left side of the display area of the display unit 160. In accordance with other embodiments of the present invention, the popup window 320 may generally be moved a distance at least equal to the amount by which the initial area 322 extends beyond the left side of the display area of the display unit 160.

Although the above example refers to a left side of a display area in a portrait mode, similar operations may also be performed with respect to the right side of the display area in portrait mode, as well as with respect to upper and lower sides of a display area in landscape mode, for example, in accordance with embodiments of the present invention.

For example, according to an embodiment of the present invention, when using a landscape mode of a portable terminal, the controller 110 may display a popup window on a surface along a longer side (i.e., an upper or lower side in landscape mode) between the left and right sides of the display area of the display unit 160, with the selected generation position of the popup window as a reference.

As another example, according to an embodiment of the present invention, when using the landscape mode, the controller 110 may initially select a surface at a longer side between the surface at the left side and the surface at the right side of the display unit 160 with the selected generation position of the popup window as the reference. After the initial selection, if the a display area a popup window corresponding to the selected generation position extends beyond the upper or lower side of the display area of the display unit 160, the controller 110 moves and displays the popup window at a position moved to towards an interior of the display area of the display unit 160 by a distance corresponding to the amount by which the display area corresponding to the initially selected generation position extends beyond the upper or lower side of the display area of the display unit 160.

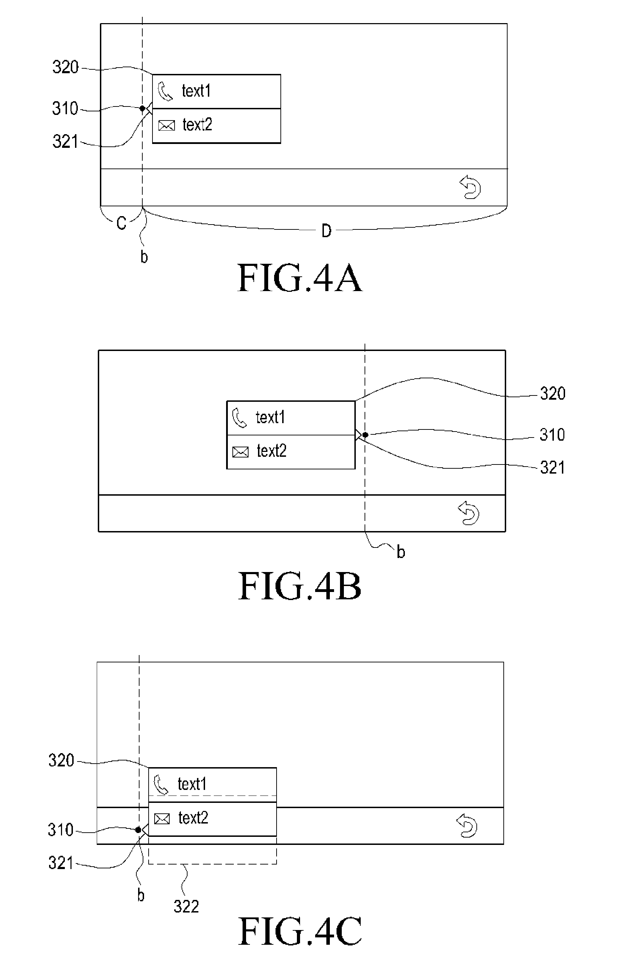

When displaying the popup window at the moved position, the controller 110 displays an anchor of the popup window at a position indicating the initially selected generation position of the popup window, even though the displayed popup window has been moved. An example of such a display is shown in FIG. 4C, which will be described in further detail herein below. In FIG. 3B, for example, movement of the popup window 320 from the initial area 322 to the area corresponding to the popup window as illustrated in FIG. 3B may correspond to a case where the popup window is initially displayed in the initial display area 322 in a landscape mode, and the controller controls movement of the popup window 320 to the position indicated in FIG. 3B upon a determination that the display mode has changed from a landscape mode to a portrait mode.

According to certain embodiments of the present invention, the generation position of the popup window may be displayed in various manners, such as a predetermined point or a menu, and the popup window may display either a particular menu on the generation position, text or an image that explains the generation position, for example.

Referring back to FIG. 1, a portable terminal according to an embodiment of the present invention may also include a camera 140, which may include a camera sensor for capturing image data and converting the captured light signal to an electrical signal, and a signal processor for converting the analog image signal, which has been captured by the camera sensor, to digital data (not shown). Such a camera sensor may be, for example a Charge-Coupled Device (CCD) sensor or a Complementary Metal-Oxide Semiconductor (CMOS) sensor, and the signal processor may be implemented by using a Digital Signal Processor (DSP). The camera sensor and the signal processor may be implemented as one unit, or as separate elements.

The image processor 150 performs Image Signal Processing (ISP) for displaying an image signal, which has been output from the camera 140, by a display unit 160. Herein, the term "ISP" refers to the execution of functions including a gamma correction, an interpolation, a spatial change, an image effect, an image scale, Auto White Balance (AWB), Auto Exposure (AE), Auto Focus (AF), etc. Therefore, the image processor 150 processes the image signal, which has been output from the camera 140, on a frame-by-frame basis, and outputs the frame image data in such a manner as to meet the characteristics and the size of the display unit 160. The image processor 150 may also include an image codec (not shown), and compress the frame image data displayed by the display unit 160 in a set scheme, and/or restore the compressed frame image data to an original frame image data. The image codec may be implemented by using either a JPEG (Joint Photographic Coding Experts Group) codec, an MPEG-4 (Moving Picture Experts Group-4) codec, a Wavelet codec, or the like. The image processor 150 may also include an On-Screen Display (OSD) function. The image processor 150 may output on-screen display data according to the size of a screen displayed under the control of the controller 110.

The display unit 160 displays an image signal, which has been output from the image processor 150, on a screen thereof, and displays user data that has been output from the controller 110. In this case, the display unit 160 may employ a Liquid Crystal Display (LCD), and thus may include an LCD controller, a memory capable of storing image data, an LCD display element, etc. When the LCD employs a touch screen, the display unit 160 may operate as an input unit. When a touch screen is used, the display unit 160 may display keys that are identical to those of the key input unit 127.

According to an embodiment of the present invention, the display unit 160 displays a popup window on a surface at a longer side in a relevant mode (e.g., a portrait mode or a landscape mode) of the portable terminal. More specifically, the display unit 160 may display a popup window along a longer side (i.e., left or right side) of the display area of the display unit 160 between the upper side and the lower side of the display area, in a portrait mode of the portable terminal. Similarly, the display unit 160 may display a popup window on a surface at a longer side (i.e., upper or lower side) of the display area of the display unit 160 between the left side and the right side of the display area in a landscape mode of the portable terminal.

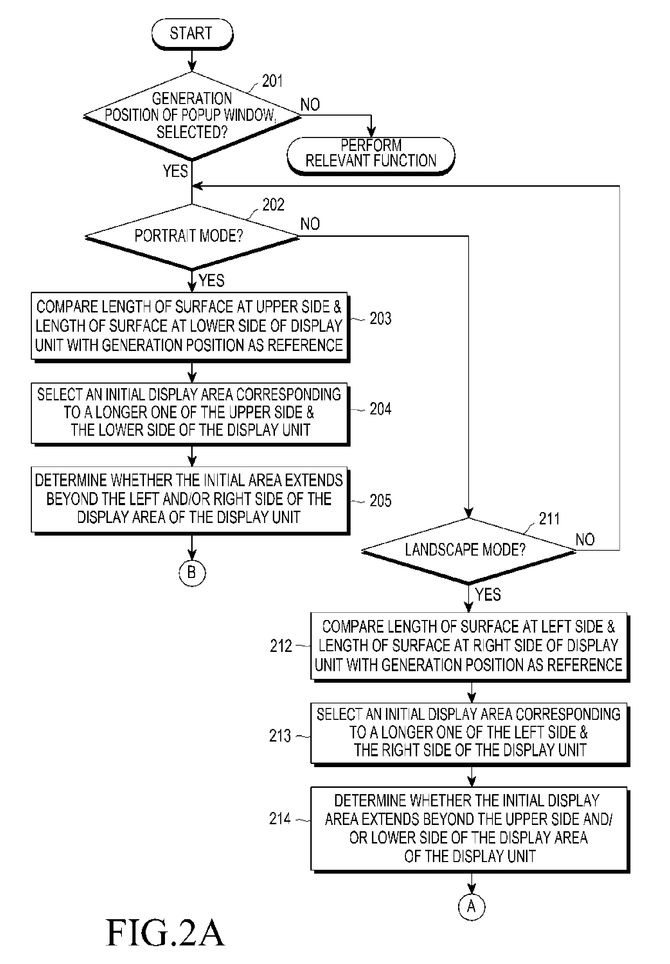

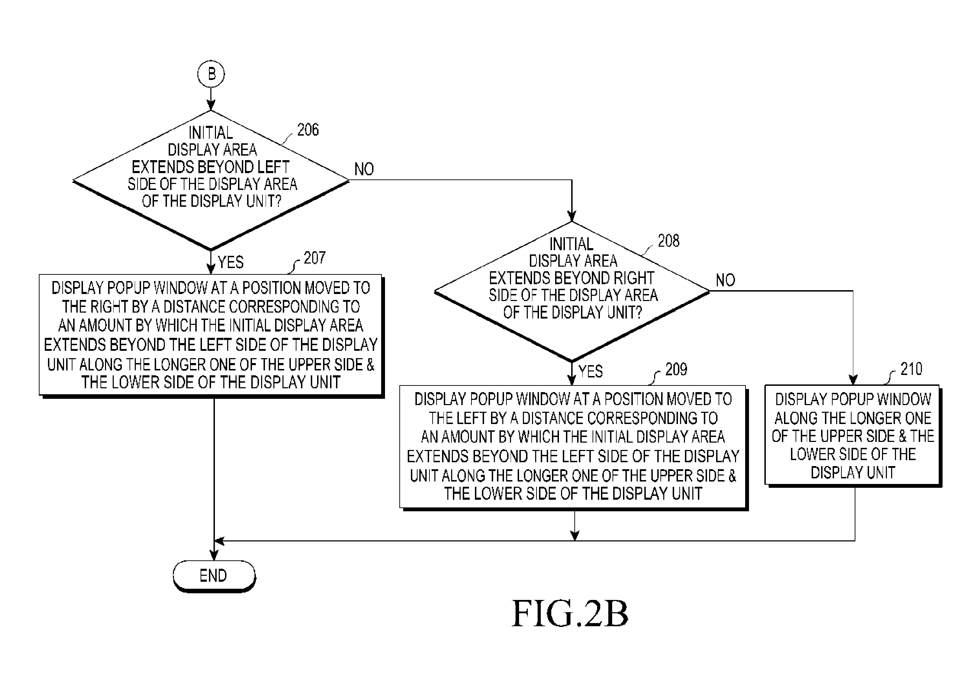

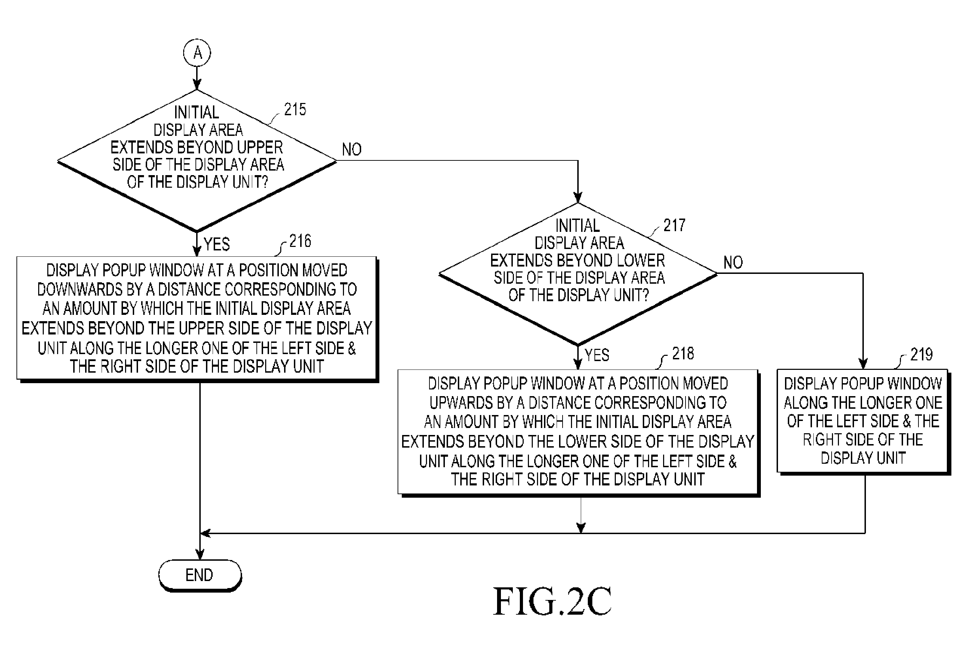

The process of automatically arranging and then displaying a popup window in a relevant mode according to an orientation change of the portable terminal as described above will be described in detail below with reference to FIGs. 2A to 2C, FIGs. 3A to 3C, and FIGs. 4A to 4C.

FIGs. 2A to 2C are diagrams illustrating a flowchart of a process for displaying a popup window in a relevant mode according to an orientation change of a portable terminal according to an embodiment of the present invention.

FIGs. 3A to 3C are diagrams illustrating display screens according to a process for displaying a popup window in a portrait mode of a portable terminal according to an embodiment of the present invention. FIGs. 4A to 4C are diagrams illustrating display screens according to a process for displaying a popup window in a landscape mode of a portable terminal according to an embodiment of the present invention.

Hereinafter, an embodiment of the present invention will be described in detail with reference to FIGs. 2A to 2C, FIGs. 3A to 3C and FIGs. 4A to 4C, together with FIG. 1.

Referring to the FIGs. 2A to 2C, upon selection of a generation position of a popup window to be displayed by the display unit 160, the controller 110 detects the selection in step 201, and then determines a current orientation of the portable terminal in order to determine a current mode of the portable terminal. When a current orientation of the portable terminal is in a longitudinal direction (i.e., a portrait orientation), the controller 110 detects in step 202 that the portable terminal is in a portrait mode, and then proceeds to step 203 where the controller 110 compares a length of a surface at the upper side and a length of a surface at the lower side of the display unit 160, with the selected generation position as a reference.

The controller 110 proceeds to step 204 where the controller 110 selects an initial display area for the popup window along a longer side (i.e., the upper or bottom side of the display area of the display unit in portrait mode), according to a result of the comparison performed at step 203.

Referring to Figure 3A, the controller 110 compares length (A) of the upper side of the display unit with length (B) of the bottom side with the generation point (a) as a reference, and according to comparison result at step 203, and the controller 110 proceeds with step 204 for selecting the length of the upper side (A) of the display unit having longer length according to the comparison result.

After selection of the display area, the controller 110 proceeds to step 205, where the controller 110 determines whether the initial display area of the popup window extends beyond the left and/or right side of the display area of the display unit 160.

When a result of the comparison shows that the initial display area of the popup window extends beyond the left side of the display area of the display unit 160, the controller 110 detects the result of the comparison in step 206, and then proceeds to step 207. In step 207, the controller 110 displays the popup window at a position moved to the right side by a distance corresponding to the amount by which the initial display area of the popup window extended beyond the left side of the display area of the display unit 160, such that the display area of the moved popup window is within the display area of the display unit 160, along the left side of the display area of the display unit 160.

When displaying the popup window at the position moved to the surface at the right side in step 207, the controller 110 displays an anchor of the popup window in such a manner as to indicate the generation position determined in step 201. Therefore, in step 207, the anchor, which is included in the displayed popup window, is displayed at the upper or lower side of the displayed popup window with the generation position as the reference, and is displayed in such a manner that the anchor indicates the initial generation position determined in step 201.

Through steps 206 and 207, when the generation position is located near at an end part of the surface at the left side of the display unit 160 in step 206, the movement of step 207 ensures that the entire popup window is displayed within the display area of the display unit 160.

Steps 208 and 209 correspond to operations similar to that performed in steps 206 and 207, performed in a case where a display area of the popup window corresponding to the original generation position extends beyond a right side of the display area of the display unit 160, and the popup window is displayed at a position moved towards the left, while the anchor is displayed at a position corresponding to the initial generation position.

Otherwise, when a result of the comparison in step 205 shows that an initial display area of the popup window corresponding to the initial generation position is within the left and right sides of the display area of the display unit, in step 210, the controller 110 displays the popup window at the initial display area according to the initial generation position, which has been selected in step 204. When displaying the popup window in step 210, the controller 110 displays an anchor of the popup window in such a manner as to indicate the generation position. Therefore, the anchor is displayed along the upper or lower side of the displayed popup window with the generation position as the reference in step 210.

FIG. 3A illustrates step 210 where a popup window 320 is displayed on the surface at the longer upper side (i.e., upper left side) with a generation position 310 as the reference in the portrait mode of the portable terminal. In FIG. 3A, the left side and the right side of the display area the display unit 160 are positioned farther to the left and right, respectively, than the left side and the right side of the popup window 320 with the generation position 310 as the reference, respectively. Therefore, an anchor 321 of the popup window is displayed in such a manner that the anchor 321 of the popup window indicates the generation position 310 at the center of the lower side of the popup window.

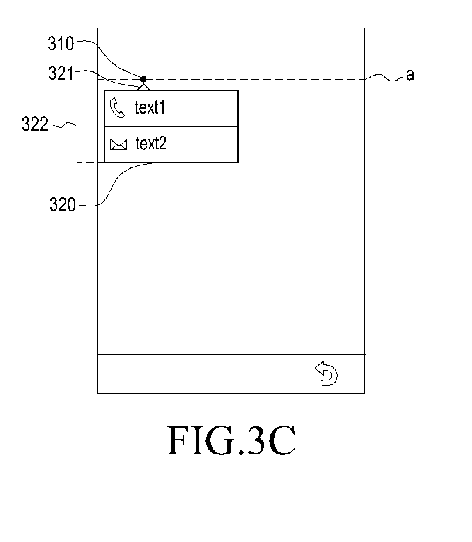

Each of FIG. 3B and FIG. 3C illustrates step 207 where the popup window 320 is displayed at the position moved from an initial position corresponding to the initially selected generation point towards the right by a distance corresponding to an amount by which a display area 322 corresponding to the initially selected generation point extends beyond the left side of the display area of the display unit 160, with the generation position 310 as the reference in the portrait mode of the portable terminal.

In each of FIG. 3B and FIG. 3C, the initial display area 322 extends beyond the left side of the display area of the display unit 160, with the generation position 310 as the reference. Therefore, the anchor 321, which is included in the moved popup window, is displayed in such a manner that the anchor 321 indicates the initial generation position 310 at the position corresponding to a center of the initial display area 322.

Referring back to FIG. A, when a current orientation of the portable terminal is in a transverse direction (i.e., a landscape direction) in step 201 where the controller 110 selects a generation position of the popup window displayed by the display unit 160, the controller 110 detects in step 211 that the portable terminal is in a landscape mode, and then proceeds to step 212. In step 212, the controller 110 compares a length of a surface at the left side and a length of a surface at the right side length of the display unit 160, with the selected generation position as a reference.

The controller 110 proceeds to step 213 where the controller 110 selects an initial display area along a longer side (i.e., the upper or lower side of the display area of the display unit in landscape mode), according to a result of the comparison of step 212.

Referring to Figure 4A, at step 212, the controller 110 compares the length (C) of the left side of the display unit with the length (D) of the right side of the display unit with the generation point (b) as a reference, and the controller 110 proceeds step 213 for selecting the length (D) of the right side of the display unit having a longer length according to the comparison result.

After selection of the display area, the controller 110 proceeds to step 214, where the controller 110 determines whether the initial display area of the popup window extends beyond the upper and/or lower side of the display area of the display unit 160.

When a result of the comparison shows that the initial display area of the popup window extends beyond the upper side of the display area of the display unit 160, the controller 110 detects the result of the comparison in step 215, and then proceeds to step 216. In step 216, the controller 110 displays the popup window at a position moved to the lower side by a distance corresponding to the amount by which the initial display area of the popup window extended beyond the upper side of the display area of the display unit 160, such that the display area of the moved popup window is within the display area of the display unit 160, along the upper side of the display area of the display unit 160.

When displaying the popup window at the position moved to the surface at the lower side in step 216, the controller 110 displays an anchor of the popup window in such a manner as to indicate the generation position determined in step 201. Therefore, in step 216, the anchor of the popup window is displayed in such a manner that the anchor of the popup window indicates the initial generation position determined in step 201.

Through steps 215 and 216, when the generation position is located at an end part of the surface at the upper side of the display unit 160 in step, the movement of step 216 ensures that the entire popup window is displayed within the display area of the display unit 160.

Steps 217 and 218 correspond to operations similar to that performed in steps 215 and 216, performed in a case where a display area of the popup window corresponding to the original generation position extends beyond a lower side of the display area of the display unit 160, and the popup window is displayed at a position moved upwards, while the anchor is displayed at a position corresponding to the initial generation position.

Otherwise, when a result of the comparison in step 214 shows that an initial display area of the popup window corresponding to the initial generation position is within the left and right sides of the display area of the display unit, in step 219, the controller 110 displays the popup window at the initial display area according to the initial generation position, which has been selected in step 213. When displaying the popup window in step 219, the controller 110 displays an anchor of the popup window in such a manner as to indicate the generation position. Therefore, in the 219, the anchor of the popup window is displayed in such a manner that the anchor indicates the initial generation position at the center of the left or right side of the initial display area of popup window from before the popup window is moved to its current displayed area.

Each of FIG. 4A and FIG. 4B illustrates step 219 where a popup window 320 is displayed on the surface at the longer side (along right side in FIG. 4A, and along left side in FIG. 4B) with a generation position 310 as the reference in the landscape mode of the portable terminal. In FIG. 4A and FIG. 4B,upper and lower sides of the display area of the display unit are farther above and below, respectively, than the initial display area of the popup window. Therefore, an anchor 321 of the popup window is displayed in such a manner that the anchor 321 of the popup window indicates the generation position 310 at the center of the left or right side of the popup window.

FIG. 4C illustrates step 218 where the popup window 320 is displayed at the position moved upwards, according to a distance corresponding to the amount by which the initial display area 322 extends below the display area of the display unit 160, with the initial generation position 310 remaining as a reference point, in the landscape mode of the portable terminal.

In FIG. 4C, the lower side of the initial display area 322 of the popup window 320 is below the lower side of the display area of the display unit 160. Therefore, the anchor 321, which is included in the moved popup window 320, is displayed in such a manner that the anchor 321 indicates the initial generation position 310 corresponding to a center of the initial display area 322 selected before the popup window 320 was moved.

The present invention provides an apparatus and a method for displaying a popup window in a portable terminal, so that it can provide a more convenient popup window to a user according to an orientation change of the portable terminal.

Although the specific embodiments such as a portable terminal have been shown and described in the description of the present invention as described above, various changes in form and details may be made in the specific embodiments of the present invention without departing from the spirit and scope of the present invention. For example, although the embodiments of the present invention are described herein with reference to a portable terminal, embodiments of the present invention may be applied to other electronic devices including a controller for controlling display of a popup window through a display unit. Therefore, the spirit and scope of the present invention should be defined not by the described embodiments thereof but by the appended claims and equivalents of the appended claims.

## Claims

1. An apparatus for displaying a popup window in a portable terminal, the apparatus comprising:
a display unit for displaying the popup window along a longer side of a display area of the display unit, according to a display mode of the portable terminal; and
a controller for controlling the display unit to display the popup window along the longer side as well as a selected generation position corresponding to the popup window, as a reference, according to the display mode of the portable terminal.

2. The apparatus as claimed in claim 1, wherein, when the display mode of the portable terminal is a portrait mode,
the controller displays the popup window within a popup window area along a left or right side of the display area of the display unit and between upper and lower sides of the display area of the display unit, with the generation position of the popup window displayed as the reference.

3. The apparatus as claimed in claim 2, wherein, in the portrait mode of the portable terminal, when an initial display area corresponding to the generation position extends beyond the left or right side of the display area of the display unit in the portrait mode, the controller moves the displayed popup window by a distance corresponding to an amount by which the popup window extends beyond the left or right side of the display area of the display unit, while maintaining the position of the generation position from before the popup window is moved.

4. The apparatus as claimed in claim 3, wherein the controller displays an anchor of the popup window at a position indicating the generation position, when displaying the popup window at the moved position.

5. The apparatus as claimed in claim 1, wherein, when the display mode of the portable terminal is a portrait mode, the controller displays the popup window within a popup window area along the upper or lower side of the display area of the display unit and within the left and right boundaries of the display area of the display unit, with the generation position of the popup window displayed as the reference.

6. The apparatus as claimed in claim 5, wherein, in the landscape mode of the portable terminal, when an initial display area corresponding to the generation position extends beyond the upper or lower side of the display area of the display unit in the portrait mode, the controller moves the displayed popup window by a distance corresponding to an amount by which the popup window extends beyond the upper or lower side of the display area of the display unit, while maintaining the position of the generation position from before the popup window is moved.

7. The apparatus as claimed in claim 6, wherein the controller displays an anchor of the popup window at a position indicating the generation position, when displaying the popup window at the moved position.

8. The apparatus as claimed in claim 1, wherein the generation position of the popup window is displayed as a predetermined point or a menu.

9. A method for displaying a popup window in a portable terminal, the method comprising:
selecting a generation position of the popup window;
determining a relevant mode of the portable terminal after selection of the generation position; and
displaying the popup window on the surface along a longer side of a displays area of the display unit and displaying the selected generation position of the popup window as a reference in the relevant mode of the portable terminal.

10. The method as claimed in claim 9, wherein displaying of the popup window comprises:
determining, when the portable terminal is in a portrait mode, whether an initial display area of the popup window corresponding to the selected generation position, extends beyond upper or lower sides of a display area of a display unit of the portable terminal; and
displaying the popup window along a longer side between the upper side and the lower side of a display area of the display unit.

11. The method as claimed in claim 9, wherein displaying the popup window comprises:
determining, when the portable terminal is in a portrait mode, whether the initial display area extends beyond left or right sides of the display area of the display unit; and
displaying, if the initial display area extends beyond the left or right sides of the display area of the display unit, the popup window at a position moved by a distance corresponding to an amount by which the initial display area extends beyond the left or right side of the display area of the display unit.

12. The method as claimed in claim 11, wherein an anchor of the popup window is displayed at a position indicating the generation position, when the popup window is displayed at the moved position.

13. The method as claimed in claim 9, wherein displaying the popup window comprises:
determining, when the portable terminal is in a landscape mode, whether an initial display area of the popup window corresponding to the selected generation position, extends beyond upper or lower sides of a display area of a display unit of the portable terminal; and
displaying the popup window along a longer side between the left side and the right side of the display unit.

14. The method as claimed in claim 9, wherein displaying of the popup window comprises:
determining, when the portable terminal is in a portrait mode, whether the initial display area extends beyond upper or lower sides of the display area of the display unit; and
displaying, if the initial display area extends beyond the upper or lower sides of the display area of the display unit, the popup window at a position moved by a distance corresponding to an amount by which the initial display area extends beyond the upper or lower side of the display area of the display unit.

15. The method as claimed in claim 14, wherein an anchor of the popup window is displayed at a position indicating the generation position, when the popup window is displayed at the moved position.

16. The method as claimed in claim 9, wherein the generation position is displayed as a predetermined point or a menu.

17. An apparatus for displaying a popup window in an electronic device, the apparatus comprising:
a display unit for displaying a popup window within a display area of a display unit in a portrait mode or a landscape mode of the electronic device,
a controller for, upon determining that a display mode of the electronic device has changed from a portrait mode to a landscape mode or from the landscape mode to the portrait mode, determining whether an initial display area of the popup window, in the changed display mode, extends beyond a side of the display area of the display unit, and if the initial display area extends beyond a side of the display area of the display unit, moving the popup window such that the display area of the moved popup window is displayed entirely within the display area of the display unit in the changed display mode.
